# FASCICULE DE BREVET EUROPEEN

(11) **EP 2 745 704 B1**
(45) Date de publication et mention de la délivrance du brevet: **14.10.2015**
(21) Numéro de dépôt: 13005954.6
(22) Date de dépôt: 20.12.2013
(51) Int. Cl.: A23L 1/237, A23C 9/142, A23C 9/144, A23C 21/00

(54) **Sel d'origine laitière riche en potassium et procédé d'obtention**
Kaliumreiches Salz, das aus Milchprodukten gewonnen wird, und sein Herstellungsprozess
High-potassium dairy salt and method for obtaining same

(30) Priorité: 21.12.2012 FR 1203551
(43) Date de publication de la demande: 25.06.2014
(73) Titulaire: Euroserum, 70170 Port Sur Saone (FR)
(72) Inventeur: Perceaux, Romain, 70000 Vesoul (FR); Naegele, Delphine, 70000 Pusy ET Epenoux (FR); Vareille, Philippe, 70000 Noidans LES Vesoul (FR)
(74) Mandataire: Delaveau, Sophie

(56) Documents cités:
- EP-A1- 0 291 980
- EP-A1- 0 536 612
- WO-A1-97/28890
- WO-A1-99/40798
- WO-A1-2006/135983
- WO-A1-2011/039414
- JP-A- H02 107 152
- JP-A- S63 141 561
- US-A- 5 223 107

## Description

L'invention concerne principalement un sel d'origine laitière riche en potassium.

L'invention concerne également un procédé d'obtention d'un tel sel.

En matière de santé, la surconsommation de sodium est visée comme l'un des principaux facteurs de risques de certaines maladies et principalement des maladies cardiovasculaires.

Des programmes alimentaires préconisent une réduction des apports journaliers en sel afin de réduire les effets néfastes du sodium. Ces programmes se basent sur des études montrant que la réduction de moitié des apports en sel journaliers pour atteindre un niveau recommandé d'environ 5 grammes, permettrait de diminuer considérablement l'apparition de certaines maladies cardiovaculaires.

Le sel communément employé à base de sodium est présent dans la majeure partie des aliments. La réduction par les consommateurs de leur apport journalier en sodium est ainsi difficilement contrôlable. On estime à cet effet à 20% l'apport en sel contrôlable par les consommateurs, principalement par la réduction de la consommation du sel de table. Or, si la réduction, voire l'élimination du sel de table, permet d'abaisser la teneur en sodium ingérée, cette élimination s'effectue au détriment des saveurs.

Les sels de potassium comportant une teneur réduite en sodium et une teneur riche en potassium sont apparus récemment. Ces sels offrent la possibilité de se substituer au sel de sodium traditionnel tout en conservant un goût salé conféré par la présence du potassium.

Mais ces sels de potassium conservent le plus souvent une teneur élevée en sodium ou se présente sous une forme poudrée qui n'incite pas le consommateur à l'utiliser comme substitut de sel de table.

C'est notamment le cas du Lactosalt^{®} qui se présente sous deux formes différentes. Le Lactosalt Optitaste^{®} comporte une teneur en sodium de 8% et se présente sous la forme d'une poudre non cristallisée, tandis que le Lactosalt 27M comporte une teneur important de 27% de sodium.

Le lactosérum est un co-produit de la production fromagère dont les sels minéraux de l'extrait sec comportent environ 40% de potassium, 12% de sodium et 28% de chlorure. Par conséquent, le lactosérum est naturellement riche en potassium et la présence de chlorure le rend apte à être utilisé pour élaborer un sel riche en potassium.

L'utilisation de lactosérum pour fabriquer un sel riche en potassium est notamment connue de la publication EP 1 061 811 qui propose un procédé de production de poudre de sel de lactosérum consistant principalement en une étape de nanofiltration de lactosérum ou de perméat d'ultrafiltration de lactosérum, suivie d'une étape de concentration du perméat de nanofiltration et d'une étape de séchage.

Ce procédé permet de réaliser une poudre de sel dont l'aspect diffère substantiellement du sel de table traditionnel. Pour les raisons évoquées précédemment, le consommateur ou l'industriel est donc moins amené à remplacer le sel de table par cette poudre de sel.

Un sel cristallisé d'origine laitière est également connu de la publication EP 0 536 612.

Un autre substitut de sel d'origine laitière est commercialisé sous la marque Lactosalt^{®} Optitaste^{®} qui comporte une teneur en sodium de 8% mais se présente également sous la forme d'une poudre.

Dans ce contexte, la présente invention vise l'élaboration d'un sel d'origine laitière, riche en potassium et palliant les inconvénients précités. L'invention vise par ailleurs un procédé d'élaboration d'un tel sel.

A cet effet, le sel d'origine laitière de l'invention est cristallisé, sa composition présente un rapport entre la teneur en potassium et la teneur en sodium qui est compris entre 3 et 6, et plus de 50% des cristaux de ce sel ont un diamètre moyen supérieur à 100 micromètres.

Le sel d'origine laitière de l'invention peut également comporter les caractéristiques optionnelles suivantes considérées isolément ou selon toutes les combinaisons techniques possibles :
- le rapport entre la teneur en potassium et la teneur en sodium est compris entre 4 et 6.
- la composition comprend, les teneurs étant exprimées en pourcentages massiques :
   35% ≤ K ≤ 45%
   7% ≤ Na ≤ 11%
   45% ≤ Cl ≤ 55%
   Ca ≤ 0,4%
   Mg ≤ 0,1%
   3 ≤ pH≤5
   Matière minérale ≥ 95 %
- la composition comprend, les teneurs étant exprimées en pourcentages massiques :
   39% ≤ K ≤ 43%
   8% ≤ Na ≤ 10%
   48% ≤ Cl ≤ 52%
   Ca ≤ 0,3%
   Mg ≤ 0,01%
   3,5 ≤ pH≤ 4,5
   Matière minérale ≥ 97 %

L'invention porte également sur un procédé d'élaboration du sel d'origine laitière précité qui est essentiellement caractérisé en ce qu'il comporte au moins les étapes :
- d'élaboration d'une solution concentrée en minéraux monovalents de saumure obtenue par électrodialyse de lactosérum, et
- d'élaboration d'un sel d'origine laitière par au moins une étape de cristallisation de la solution concentrée en minéraux monovalents.

Le procédé de l'invention peut également comporter les caractéristiques optionnelles suivantes considérées isolément ou selon toutes les combinaisons techniques possibles :
- l'élaboration de la solution concentrée en minéraux monovalents de saumure comporte une étape de nanofiltration permettant d'obtenir un perméat de nanofiltration de la saumure.
- le perméat de nanofiltration de la saumure obtenue par électrodialyse de lactosérum subit au moins une étape de concentration de façon à obtenir une saumure nano-filtrée concentrée.
- le perméat de nanofiltration de la saumure obtenue par électrodialyse de lactosérum est concentré par osmose inverse.
- le perméat de nanofiltration de la saumure subit une étape de réduction du taux de matières organiques.
- l'étape de réduction du taux de matières organiques est une étape d'adsorption sur un support adsorbant formant étape de désodorisation.
- l'élaboration d'une solution concentrée en minéraux monovalents de saumure comprend une étape de concentration de la solution issue de l'étape de réduction du taux de matières organiques, suivie d'une étape de filtration.
- l'étape de concentration est une étape d'évaporation sous vide.
- le procédé de l'invention comprend, dans l'ordre, les étapes suivantes :
   - nanofiltration de la saumure obtenue par électrodialyse de lactosérum et obtention d'un perméat de nanofiltration,
   - concentration du perméat de nanofiltration par osmose inverse et obtention d'un rétentat,
   - désodorisation par adsorption sur un support adsorbant et obtention d'une solution à faible teneur en matière organiques,
   - concentration de la solution à faible teneur en matière organique obtenue à l'étape précédente, filtration de la solution obtenue et obtention d'une solution concentrée en minéraux monovalents de saumure.
- l'étape d'élaboration du sel d'origine laitière comprend au moins une étape de cristallisation à circulation forcée de la solution concentrée en minéraux monovalents de saumure, et une étape de séchage.
- l'étape d'élaboration du sel d'origine laitière comprend une étape de centrifugation préalable à l'étape de séchage.

L'invention porte enfin sur l'utilisation de saumure obtenue par électrodialyse de lactosérum pour fabriquer un sel d'origine laitière cristallisé tel que défini précédemment.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est un schéma synoptique des deux étapes essentielles du procédé de préparation d'un sel d'origine laitière,
- la figure 2 est un schéma synoptique du procédé de l'invention selon une variante de réalisation,
- la figure 3 est une micrographie de cristaux du sel d'origine laitière de l'invention, et
- la figure 4 est une micrographie de cristaux du sel commercialisé sous la marque Lactosalt Optitaste^{®}.

L'obtention d'un lactosérum déminéralisé est un procédé connu permettant de contrôler les teneurs en protéines sériques et en lactose des laits infantiles.

Le procédé de déminéralisation de lactosérum comprend notamment une première étape d'électrodialyse générant d'une part un lactosérum pauvre en matières minérales destiné à subir d'autres étapes de déminéralisation, et d'autre part un co-produit, la saumure, riche en matières minérales.

Le Tableau 1 ci-dessous montre à titre d'exemple la composition d'une saumure obtenue par électrodialyse de lactosérum. Les teneurs des composants de la saumure sont exprimées en pourcentage d'extrait sec :

**Tableau 1**

| Composant | % de l'Extrait Sec |
|---|---|
| Na | 9,45 |
| K | 27,01 |
| K/Na | 2,86 |
| Ca | 2,33 |
| Mg | 0,37 |
| Cl | 31,8 |
| P | 3,39 |
| Lactates | 5,73 |
| Citrates | 11,03 |
| Matières minérales | 74,78 |

La Demanderesse a découvert la possibilité d'utiliser la saumure, co-produit du procédé de déminéralisation du lactosérum, pour élaborer un sel d'origine laitière riche en potassium.

L'étape d'électrodialyse est réalisée conformément aux techniques connues par une alternance de membranes anioniques et cationiques soumises à un champ électrique.

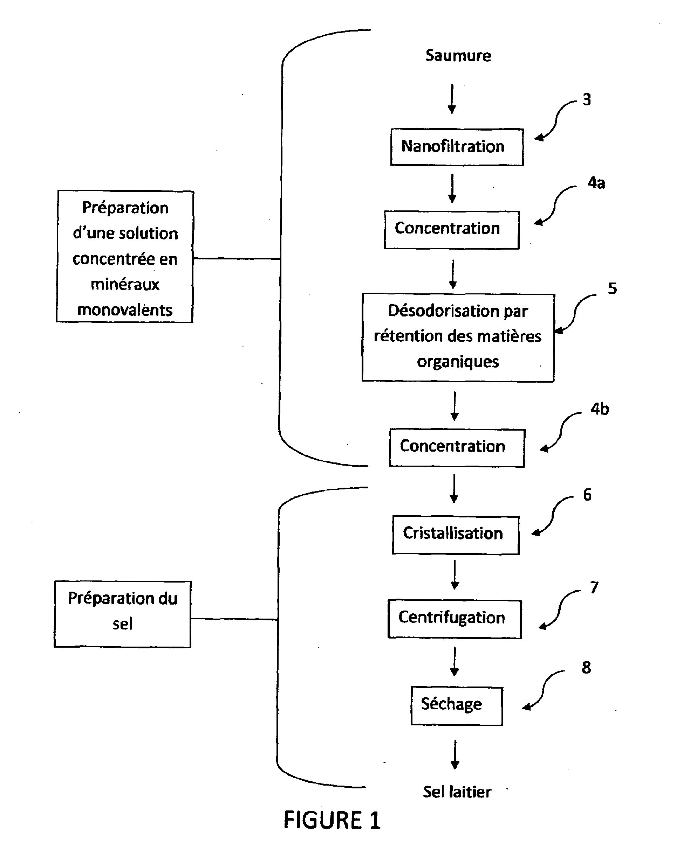

En référence à la figure 1, la saumure est soumise à une première étape 1 de préparation d'une solution concentrée en minéraux monovalents et une seconde étape 2 de préparation du sel selon les techniques classiques industrielles.

Selon l'invention, la première étape 1 de préparation d'une solution concentrée en minéraux monovalents comprend au moins une première étape de nanofiltration 3 de la saumure, suivie d'au moins d'une première étape de concentration 4a, d'une étape de désodorisation par rétention des matières organiques 5 et d'une seconde étape de concentration 4b.

Il est à noter que tant l'étape de nanofiltration 3, que l'étape de désodorisation 5 consistent notamment à retenir les matières organiques. Ainsi, la nécessité, dans le procédé de l'invention, d'extraire de la saumure les matières organiques pour obtenir un produit concentré en potassium et en sodium, se confond avec la nécessité d'obtenir un produit exempt de mauvaise odeur, étant entendu que les mauvaises odeurs proviennent de la présence de matières organiques.

De façon plus générale, la première étape 1 de préparation d'une solution concentrée en minéraux monovalents comprend donc une alternance d'étapes de concentration et d'extraction des matières organiques, ces étapes incluant ou prévoyant au moins une étape d'enrichissement en minéraux monovalents.

La seconde étape 2 de préparation du sel à partir de la solution concentrée en minéraux monovalents de la première étape 1 comprend une première étape de cristallisation 6 suivie d'une étape de centrifugation 7 et d'une étape de séchage 8. Cette seconde étape 2 de préparation du sel permet d'obtenir un sel d'origine laitière cristallisé similaire en texture à un sel de table classique mais présentant une teneur riche en potassium et une faible teneur en sodium comme il sera détaillé plus loin.

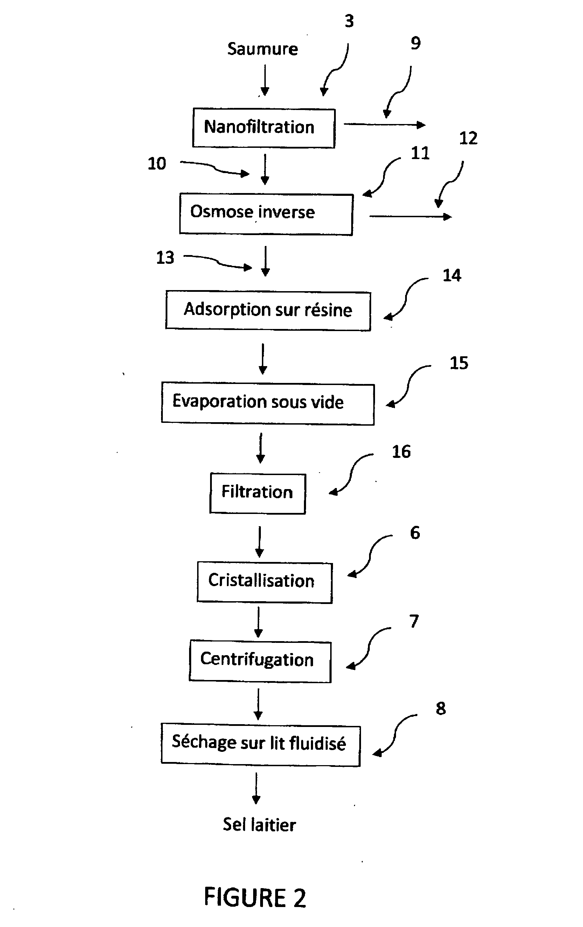

Selon une variante préférée de l'invention et en référence à la figure 2, l'étape de nanofiftration 3 de la saumure obtenue par électrodialyse de lactosérum est réalisée au moyen de membranes présentant un seuil de coupure d'environ 300 Da pour une pression appliquée comprise entre 20 et 25 Bars.

La nanofiltration 3 permet de séparer les minéraux monovalents des autres composants de la saumure, et en particulier des matières organiques et du phosphore. Outre la séparation des minéraux monovalents, cette étape de nanofiltration 3 de la saumure obtenue par électrodialyse de lactosérum permet d'éviter la formation d'une pâte non exploitable lors de la cristallisation ultérieure.

Le perméat 10 de la nanofiltration est ainsi enrichi en minéraux monovalents en présentant une faible teneur en matière organique et en minéraux bivalents qui sont passés dans le rétentat 9 de nanofiltration. Le perméat 10 de la nanofiltration 3 présente un pourcentage en extrait sec d'environ 1%.

Ce perméat 10 subit alors une étape de concentration par osmose inverse 11 à une pression comprise entre 25 et 30 Bars

Le perméat 12 issu de l'étape d'osmose inverse 11 est principalement constitué d'eau et de traces de minéraux. Le rétentat 13 utilisé dans la suite du procédé est concentré en minéraux monovalents et présente un pourcentage en extrait sec d'environ 5%. Par ailleurs, l'osmose inverse présente une concentration énergétique plus faible que d'autres techniques de concentration telle que par exemple la concentration sur évaporateur.

Le rétentat 13 de l'étape d'osmose inverse 11 est ensuite soumis à une étape d'adsorption sur résine 14 par laquelle les matières organiques restantes sont éliminées. Les résines utilisées sont des résines adsorbantes de désodorisation qui présentent une certaine sélectivité sur les molécules organiques éliminées. Notamment, ces résines permettent d'éliminer les acides gras volatils principaux responsables des mauvaises odeurs. La solution obtenue présente un pourcentage en extrait sec d'environ 5%. En variante, il est possible d'utiliser en lieu et place des résines, du charbon actif ou un support actif se regroupant tous sous l'appellation de support adsorbant.

La saumure nano-osmosée et désodorisée issue de l'étape de désodorisation 14 est ensuite concentrée par évaporation sous vide 15 dans un évaporateur sous vide à flot tombant. Cette étape permet d'augmenter la teneur en extrait sec et d'éviter une surconsommation en énergie lors de l'étape ultérieure de cristallisation. La teneur en extrait sec en sortie de l'étape de concentration est d'environ 15%.

Avantageusement l'étape de concentration 15 est réalisée après l'étape d'adsorption sur résine 14 de façon à bénéficier dans cette dernière étape d'une matière sèche soluble évitant l'encrassement des résines et l'altération des capacités de désodorisation.

La saumure nano-osmosée, désodorisée et concentrée est alors soumise à une étape de filtration 16 permettant d'éliminer les composés de phosphate de calcium provenant de la nanofiltration et qui auraient pu être formés lors de l'étape précédente de concentration 15 par précipitation à une teneur en extrait sec d'environ de 15%.

La saumure nano-osmosée, désodorisée, concentrée et filtrée issue de l'étape de filtration constitue ainsi la solution concentrée en minéraux monovalent 1. Cette solution permet alors de préparer le sel selon des techniques classiques.

A cet effet et toujours en référence à la figure 2, la solution concentrée en minéraux monovalents est soumise à l'étape de cristallisation 6 au moyen d'un cristalliseur à circulation forcée. Cette étape engendre la formation de cristaux de KCI et de NaCl en augmentant considérablement la teneur en extrait sec qui atteint 67 à 70 %. Lors de cette étape, la concentration saline de la saumure nano-osmosée augmente jusqu'à la limite de solubilité des sels.

La saumure nano-osmosée, désodorisée, concentrée, filtrée et cristallisée est ensuite centrifugée lors d'une étape de centrifugation 7 permettant de séparer les phases liquide et solide. Cette phase est d'autant plus requise que la phase liquide peut comporter des traces de matières organiques. La teneur en extrait sec augmente considérablement lors de cette étape en atteignant environ 95%.

Le produit est ensuite séché lors d'une étape de séchage sur lit fluidisé 8. Cette étape permet d'obtenir un sel d'origine laitière cristallisé dont la teneur en extrait sec est proche de 99%. Par ailleurs, le sel présente une texture comparable à un sel de sodium classique sans présenter de problèmes de mottage.

Une autre technique de séchage connu consiste en un séchage par atomisation. Mais cette technique entraîne une consommation énergétique trop importante.

Le séchage sur lit fluidisé 8 ne peut être mis en oeuvre uniquement sur un produit dont la teneur en extrait sec est importante. Or le procédé de l'invention permet, par la suite d'étapes préalablement définies, de préparer un produit à teneur en extrait sec élevé, ce qui autorise le séchage sur lit fluidisée pour obtenir un produit présentant une texture cristallisée et manipulable sans phénomènes de mottage.

Le tableau 2 présente la composition du sel d'origine laitière de l'invention selon trois teneurs en extrait sec différentes en sortie de cristallisation comparée à la composition du Lactosalt Optitaste^{®} mesurée par la Demanderesse.

On constate un rapport K/Na variant de 4,19 à 5 qui est sensiblement supérieur au rapport K/Na de 2,86 de la saumure en sortie d'électrodialyse (Tableau 1).

Cette augmentation sensible de ce rapport au cours du procédé de l'invention permet d'augmenter la teneur en potassium au détriment de la teneur en sodium, tout en conservant un taux de sodium non négligeable pour éviter l'apparition d'un goût métallique provenant d'une teneur trop élevée en potassium.

En outre, le sel d'origine laitière de l'invention est quasiment exempt de matière organique puisqu'il présente une teneur en matière minérale comprise entre 97,29 et 98,5.

**Tableau 2**

| | Sel d'origine laitière de l'invention | | | |
|---|---|---|---|---|
| Composant | 67% d'extrait sec en sortie de cristallisation | 70% d'extrait sec en sortie de cristallisation | 73% d'extrait sec en sortie de cristallisation | Lactosalt Optitaste^{®} |
| Na | 9,92 | 8,50 | 8,28 | 9,55 |
| K | 41,6 | 40,2 | 41,4 | 33,96 |
| K/Na | 4,19 | 4,73 | 5 | 3,55 |
| Ca | 0,116 | 0,29 | 0,03 | 0 |
| Mg | 0 | 0 | 0 | 0 |
| Cl | 49,85 | 50,3 | 50,02 | 45,1 |
| Ph | 4,15 | 4,74 | 3,93 | 6,25 |
| Matières minérales | 97,69 | 97,29 | 98,5 | 86,65 |

Des analyses microscopiques ainsi que des études granulométriques ont été effectuées sur le sel d'origine laitière de l'invention.

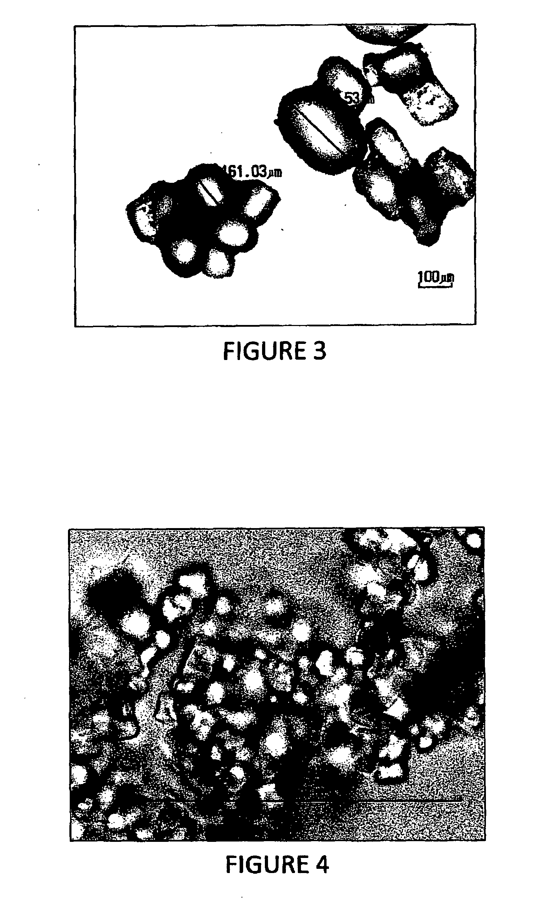

On se réfère à la figure 3 illustrant des cristaux du sel de l'invention. Sur cette figure, deux diamètres de cristaux ont été mesurés : un premier diamètre de 161 micromètres et un second diamètre de 306 micromètres, la taille de ces cristaux étant représentative des cristaux formant le sel de l'invention.

Ces résultats sont corroborés par les analyses granulométriques qui ont été effectuées par la société GEA Kestner réalisant les tests de cristallisation pour les trois teneurs en extraits secs mentionnées dans le Tableau 2.

Les résultats sont les suivants :
Pour un sel comportant 67% d'extrait sec en sortie de cristallisation, plus de 50% des cristaux ont un diamètre moyen compris entre 150 et 220 micromètres.
Pour un sel comportant 70% d'extrait sec en sortie de cristallisation, plus de 50% des cristaux ont un diamètre moyen compris entre 155 et 175 micromètres.
Pour un sel comportant 67% d'extrait sec en sortie de cristallisation, plus de 50% des cristaux ont un diamètre moyen compris entre 155 et 210 micromètres.
Le sel cristallisé de l'invention permet à ce sel de présenter une texture comparable à celle d'un sel à bas de sodium.

En revanche, comme illustré sur la figure 4, la taille des cristaux du Lactosalt Optitaste^{®} est bien inférieure à 100 micromètres, ce dont il résulte la texture déjà mentionnée plus haut du Lactosalt Optitaste^{®} plus proche de celle d'une poudre que d'un sel cristallisé.

## Revendications

1. Sel d'origine laitière cristallisé dont la composition présente un rapport entre la teneur en potassium et la teneur en sodium qui est compris entre 3 et 6, et pour lequel plus de 50% des cristaux ont un diamètre moyen supérieur à 100 micromètres.

2. Sel d'origine laitière selon la revendication 1, **caractérisé en ce que** le rapport entre la teneur en potassium et la teneur en sodium qui est compris entre 4 et 6.

3. Sel d'origine laitière l'une quelconque des revendications précédentes, **caractérisé en ce que** sa composition comprend, les teneurs étant exprimées en pourcentages massiques :
35% ≤ K ≤ 45%
7% ≤ Na ≤ 11%
45% ≤ Cl ≤ 55%
Ca ≤ 0,4%
Mg ≤ 0,1%
3 ≤ pH ≤ 5
Matière minérale ≥ 95 %

4. Sel d'origine laitière selon l'une quelconque des revendications précédentes, **caractérisé en ce que** sa composition comprend, les teneurs étant exprimées en pourcentages massiques :
39% ≤ K ≤ 43%
8% ≤ Na ≤ 10%
48% ≤ Cl ≤ 52%
Ca ≤ 0,3%
Mg ≤ 0,01%
3,5 ≤ pH ≤ 4,5
Matière minérale ≥ 97 %

5. Procédé de préparation d'un sel d'origine laitière selon l'une quelconque des revendications 1 à 4, **caractérisé en ce qu'**il comporte au moins les étapes :
- d'élaboration d'une solution concentrée en minéraux monovalents de saumure obtenue par électrodialyse de lactosérum (1), et
- d'élaboration d'un sel d'origine laitière (2) par au moins une étape de cristallisation (6) de la solution concentrée en minéraux monovalents.

6. Procédé de préparation d'un sel d'origine laitière selon la revendication 5, **caractérisé en ce que** l'élaboration de la solution concentrée en minéraux monovalents de saumure comporte une étape de nanofiltration (3) permettant d'obtenir un perméat de nanofiltration de la saumure.

7. Procédé de préparation d'un sel d'origine laitière selon la revendication 6, **caractérisé en ce que** le perméat de nanofiltration de la saumure obtenue par électrodialyse de lactosérum subit au moins une étape de concentration (4a,4b) de façon à obtenir une saumure nano-filtrée concentrée.

8. Procédé de préparation d'un sel d'origine laitière selon la revendication 7, **caractérisé en ce que** le perméat de nanofiltration de la saumure obtenue par électrodialyse de lactosérum est concentré par osmose inverse (11).

9. Procédé de préparation d'un sel d'origine laitière selon l'une quelconque des revendications 6 à 8, **caractérisé en ce que** le perméat de nanofiltration de la saumure subit une étape de réduction du taux de matières organiques (5,14).

10. Procédé de préparation d'un sel d'origine laitière selon la revendication 9, **caractérisé en ce que** l'étape de réduction du taux de matières organiques (5,14) est une étape d'adsorption sur un support adsorbant 14 formant étape de désodorisation.

11. Procédé de préparation d'un sel d'origine laitière selon l'une quelconque des revendications 9 et 10, caractérisé en ce l'élaboration d'une solution concentrée en minéraux monovalents de saumure comprend une étape de concentration (15) de la solution issue de l'étape de réduction du taux de matières organiques (5,14), suivie d'une étape de filtration.

12. Procédé de préparation d'un sel d'origine laitière selon la revendication 11, **caractérisé en ce que** l'étape de concentration (15) est une étape d'évaporation sous vide (15).

13. Procédé de préparation d'un sel d'origine laitière selon l'une quelconque des revendications 5 à 12, **caractérisé en ce qu'**il comprend, dans l'ordre, les étapes suivantes :
- nanofiltration (3) de la saumure obtenue par électrodialyse de lactosérum et obtention d'un perméat de nanofiltration,
- concentration (4) du perméat de nanofiltration par osmose inverse (11) et obtention d'un rétentat,
- désodorisation par adsorption sur un support adsorbant (14) et obtention d'une solution à faible teneur en matière organiques,
- concentration (15) de la solution à faible teneur en matière organique obtenue à l'étape précédente, filtration (16) de la solution obtenue et obtention d'une solution concentrée en minéraux monovalents de saumure.

14. Procédé de préparation d'un sel d'origine laitière selon l'une quelconque des revendications 5 à 12, **caractérisé en ce que** l'étape d'élaboration du sel d'origine laitière comprend au moins une étape de cristallisation (6) à circulation forcée de la solution concentrée en minéraux monovalents de saumure, et une étape de séchage (8).

15. Procédé de préparation d'un sel d'origine laitière selon la revendication 14, **caractérisé en ce que** l'étape d'élaboration du sel d'origine laitière comprend une étape de centrifugation (7) préalable à l'étape de séchage (8).

16. Utilisation d'une saumure obtenue par electrodialyse de lactoserum pour fabriquer un sel d'origine laitière selon l'une quelconque des revendications 1 à 4.

## Patentansprüche

1. Kristallisiertes Salz aus Milch, dessen Zusammensetzung ein Verhältnis zwischen Kaliumgehalt und Natriumgehalt aufweist, das zwischen 3 und 6 beträgt, und bei dem mehr als 50% der Kristalle einen durchschnittlichen Durchmesser von mehr als 100 Mikrometer haben.

2. Salz aus Milch nach Anspruch 1, **dadurch gekennzeichnet, dass** das Verhältnis zwischen Kaliumgehalt und Natriumgehalt zwischen 4 und 6 beträgt.

3. Salz aus Milch nach einem der vorhergehenden Ansprüche, **dadurch gekennzeichnet, dass** seine Zusammensetzung Folgendes umfasst, wobei die Gehalte in Gewichtsprozent ausgedrückt sind:
35% ≤ K ≤ 45%
7% ≤ Na ≤ 11%
45% ≤ Cl ≤ 55%
Ca ≤ 0,4%
Mg ≤ 0,1%
3 ≤ pH ≤ 5
Mineralstoff ≥ 95%

4. Salz aus Milch nach einem der vorhergehenden Ansprüche, **dadurch gekennzeichnet, dass** seine Zusammensetzung Folgendes umfasst, wobei die Gehalte in Gewichtsprozent ausgedrückt sind:
39% ≤ K ≤ 43%
8% ≤ Na ≤ 10%
48% ≤ Cl ≤ 52%
Ca ≤ 0,3%
Mg ≤ 0,01%
3,5 ≤ pH ≤ 4,5
Mineralstoff ≥ 97%

5. Verfahren zur Aufbereitung eines Salzes aus Milch nach einem der Ansprüche 1 bis 4, **dadurch gekennzeichnet, dass** es wenigstens folgende Schritte umfasst:
- Herstellung einer Lösung, die konzentriert ist an einwertigen Mineralien aus Sole, die man durch Elektrodialyse von Milchserum (1) erhält, und
- Herstellung eines Salzes aus Milch (2) durch wenigstens einen Schritt der Kristallisation (6) der Lösung, die konzentriert ist an einwertigen Mineralien.

6. Verfahren zur Aufbereitung eines Salzes aus Milch nach Anspruch 5, **dadurch gekennzeichnet, dass** die Herstellung der Lösung, die konzentriert ist an einwertigen Mineralien aus Sole, einen Schritt der Nanofiltration (3) umfasst, die es ermöglicht, ein Nanofiltrationspermeat der Sole zu erhalten.

7. Verfahren zur Aufbereitung eines Salzes aus Milch nach Anspruch 6, **dadurch gekennzeichnet, dass** das Nanofiltrationspermeat der Sole, die man durch Elektrodialyse von Milchserum erhält, wenigstens einem Schritt der Aufkonzentrierung (4a, 4b) unterzogen wird, um eine nanofiltrierte, konzentrierte Sole zu erhalten.

8. Verfahren zur Aufbereitung eines Salzes aus Milch nach Anspruch 7, **dadurch gekennzeichnet, dass** das Nanofiltrationspermeat der Sole, die man durch Elektrodialyse von Milchserum erhält, durch Umkehrosmose (11) aufkonzentriert wird.

9. Verfahren zur Aufbereitung eines Salzes aus Milch nach einem der Ansprüche 6 bis 8, **dadurch gekennzeichnet, dass** das Nanofiltrationspermeat der Sole einem Schritt der Verringerung des Anteils an organischen Stoffen (5, 14) unterzogen wird.

10. Verfahren zur Aufbereitung eines Salzes aus Milch nach Anspruch 9, **dadurch gekennzeichnet, dass** der Schritt der Verringerung des Anteils an organischen Stoffen (5, 14) ein Schritt der Adsorption an einem Adsorbensträger (14) ist, der einen Schritt der Desodorierung bildet.

11. Verfahren zur Aufbereitung eines Salzes aus Milch nach einem der Ansprüche 9 und 10, **dadurch gekennzeichnet, dass** die Herstellung einer Lösung, die konzentriert ist an einwertigen Mineralien aus Sole, einen Schritt der Aufkonzentrierung (15) der Lösung umfasst, die aus dem Schritt der Verringerung des Anteils an organischen Stoffen (5, 14) stammt, gefolgt von einem Schritt der Filtration.

12. Verfahren zur Aufbereitung eines Salzes aus Milch nach Anspruch 11, **dadurch gekennzeichnet, dass** der Schritt der Aufkonzentrierung (15) ein Schritt der Vakuumverdampfung (15) ist.

13. Verfahren zur Aufbereitung eines Salzes aus Milch nach einem der Ansprüche 5 bis 12, **dadurch gekennzeichnet, dass** es in jener Reihenfolge folgende Schritte umfasst:
- Nanofiltration (3) der Sole, die man durch Elektrodialyse von Milchserum erhält, und Erhalt eines Nanofiltrationspermeats,
- Aufkonzentrierung (4) des Nanofiltrationspermeats durch Umkehrosmose (11) und Erhalt eines Retentats,
- Desodorierung durch Adsorption an einem Adsorbensträger (14) und Erhalt einer Lösung mit geringem Gehalt an organischen Stoffen,
- Aufkonzentrierung (15) der Lösung mit geringem Gehalt an organischen Stoffen, die man im vorhergehenden Schritt erhält, Filtration (16) der erhaltenen Lösung und Erhalt einer Lösung, die konzentriert ist an einwertigen Mineralien von Sole.

14. Verfahren zur Aufbereitung eines Salzes aus Milch nach einem der Ansprüche 5 bis 12, **dadurch gekennzeichnet, dass** der Schritt der Herstellung des Salzes aus Milch wenigstens einen Schritt der Kristallisation (6) mit Zwangsumlauf der Lösung umfasst, die konzentriert ist an einwertigen Mineralien von Sole, und einen Schritt der Trocknung (8).

15. Verfahren zur Aufbereitung eines Salzes aus Milch nach Anspruch 14, **dadurch gekennzeichnet, dass** der Schritt der Herstellung des Salzes aus Milch vor dem Schritt der Trocknung (8) einen Schritt der Zentrifugierung (7) umfasst.

16. Verwendung einer Sole, die man durch Elektrodialyse von Milchserum erhält, für die Erzeugung eines Salzes aus Milch nach einem der Ansprüche 1 bis 4.

## Claims

1. Crystallised dairy salt of which the composition has a ratio between the potassium content and the sodium content that is between 3 and 6, and for which more than 50% of the crystals have a mean diameter greater than 100 micrometres.

2. Dairy salt according to claim 1, **characterised in that** the ratio between the potassium content and the sodium content is between 4 and 6.

3. Dairy salt, as claimed in any preceding claim, **characterised in that** its composition comprises, with the content expressed as percentages by weight:
35% ≤ 45%
7% ≤ Na ≤ 11%
45% ≤ Cl ≤ 55%
Ca ≤ 0.4%
Mg ≤ 0.1%
3 ≤ pH ≤ 5
Mineral matter ≥ 95%

4. Dairy salt as claimed in any preceding claim, **characterised in that** its composition comprises, with the content expressed as percentages by weight:
39 ≤ K ≤ 43%
8% ≤ Na ≤ 10%
48% ≤ Cl ≤ 52%
Ca ≤ 0.3%
Mg ≤ 0.01%
3.5 ≤ pH ≤ 4.5
Mineral matter ≥ 97%

5. Method for preparing a dairy salt according to any of claims 1 to 4, **characterised in that** it comprises at least the steps of;
- preparing a concentrated solution of brine monovalent minerals obtained by electrodialysis of whey (1), and
- preparing a dairy salt (2) by at least one step of crystallisation (6) of the concentrated solution of monovalent minerals.

6. Method for preparing a dairy salt according to claim 5, **characterised in that** the preparing of the concentrated solution of monovalent minerals of brine comprises a step of nanofiltration (3) that makes it possible to obtain a nanofiltration permeate of the brine.

7. Method for preparing a dairy salt according to claim 6, **characterised in that** the nanofiltration permeate of the brine obtained by electrodialysis of whey is subjected to at least one step of concentration (4a, 4b) in such a way as to obtain a concentrated nanofiltered brine.

8. Method for preparing a dairy salt according to claim 7, **characterised in that** the nanofiltration permeate of the brine obtained by electrodialysis of whey is concentrated by reverse osmosis (11).

9. Method for preparing a dairy salt according to any of claims 6 to 8, **characterised in that** the nanofiltration permeate of the brine is subjected to a step of reducing the content of organic matter (5, 14).

10. Method for preparing a dairy salt according to claim 9, **characterised in that** the step of reducing the content of organic matter (5, 14) is an adsorption step on an absorbent support 14 forming a step of deodorisation.

11. Method for preparing a dairy salt according to any of claims 9 and 10, **characterised in that** the preparing of a concentrated solution of monovalent minerals of brine comprises a step of concentrating (15) the solution coming from the step of reducing the content of organic matter (5, 14), followed by a step of filtration.

12. Method for preparing a dairy salt according to claim 11, **characterised in that** the step of concentration (15) is a step of evaporation in a vacuum (15).

13. Method for preparing a dairy salt according to any of claims 5 to 12, **characterised in that** it comprises, in order, the following steps:
- nanofiltration (3) of the brine obtained by electrodialysis of whey and obtaining of a nanofiltration permeate,
- concentration (4) of the nanofiltration permeate by reverse osmosis (11) and obtaining of a retentate,
- deodorisation by adsorption on an absorbent support (14) and obtaining of a solution with a low organic matter content,
- concentration (15) of the solution with a low organic matter content obtained in the preceding step, filtration (16) of the solution obtained and obtaining of a concentrated solution of monovalent minerals of brine.

14. Method for preparing a dairy salt according to any of claims 5 to 12, **characterised in that** the step of preparing the dairy salt comprises at least one step of crystallisation (6) with forced circulation of the concentrated solution of monovalent minerals of brine, and a step of drying (8).

15. Method for preparing a dairy salt according to claim 14, **characterised in that** the step of preparing the dairy salt comprises a step of centrifugation (7) prior to the step of drying (8).

16. Use of a brine obtained by electrodialysis of whey in order to manufacture a dairy salt according to any of claims 1 to 4.
